# EUROPEAN PATENT SPECIFICATION

(11) **EP 3 001 893 B1**
(45) Date of publication and mention of the grant of the patent: **05.04.2017**
(21) Application number: 15188117.4
(22) Date of filing: 02.10.2015
(51) Int. Cl.: A01D 90/00, A01D 90/10, A01K 5/00, A01D 90/02

(54) **MIXING WAGON**
FUTTERMISCHWAGEN
CHARIOT MÉLANGEUR DE FOURRAGE

(30) Priority: 03.10.2014 IT PD20140255
(43) Date of publication of application: 06.04.2016
(73) Proprietor: Sitrex S.p.a., 06018 Città di Castello (PG) (IT)
(72) Inventor: SIGNORELLI, Giovanni, 06018 Città di Castello (PG) (IT)
(74) Representative: Locas, Davide

(56) References cited:
- WO-A1-00/71239
- DE-U1- 7 806 420
- GB-A- 1 090 038
- GB-A- 2 047 655

## Description

The invention relates to a mixing wagon according to the preamble of the principal claim.

In the field of stock raising, the use of mixing wagons for feeding animals is known. These mixing wagons are generally provided with means for loading the fodder mixtures, a mixing container in which the mixtures are mixed, and one or more conveyor belts which receive the mixture leaving the mixing container and distribute it to the stock.

The conveyor belts are generally arranged transversely to the direction of longitudinal extension of the wagon, so as to distribute the mixture laterally relative to the wagon.

The position of the conveyor belts along the wagon is essentially determined by various choices made in terms of construction. In fact, the known wagons include front distribution discharge wagons, that is to say those in which the belt is positioned in front of the front wheels of the vehicle, as in that described in EP 930 005 for example; those in which the distribution discharge is in an intermediate position between the front and rear wheels of the vehicle, as in EP 0003813; and, finally, those with a rear discharge.

Of these, front discharge wagons represent the solution which provides greater ease of access to the stock housing, as well as greater visibility of the mixture distribution process.

Typically, in these wagons the mixing container is located in a central area of each wagon, and a longitudinal conveyor belt is provided, which conveys the mixture leaving the mixing container to a second belt, positioned transversely to the previous one, and located in the front part of the wagon, which discharges the fodder mixture laterally in order to distribute it to the stock.

However, because of the presence of the front conveying member, the front area of the wagon cannot be easily accessed by the loading means, which have to reach the ground in order to collect the fodder product to be loaded into the mixing container.

Therefore, since the loading means typically consist of a cutter mounted rotatably on a fixed arm near the mixing container and this cutter is lowered to collect the product by the rotation of the arm, an arm of considerable size is required to enable the cutter to reach the ground. Consequently, the loading means commonly project considerably from the supporting structure of known wagons, thus seriously limiting their manoeuvrability.

Furthermore, the resulting large overall dimensions impede the safe driving of the mixing wagon along public roads.

To overcome these drawbacks, European Patent EP 1183095 describes a mixing wagon comprising loading means equipped with an extendable arm, allowing the arm to be elongated during the collection phases and shortened during the other, non-operational phases.

However, this solution considerably increases the complexity of the construction of the wagon, which has a considerable effect on production costs. In this context, it should be borne in mind that a further conveying element, for carrying the collected material from the cutter to the mixing container, is present inside the arm; consequently this element must also be adaptable to the different operating configurations of the arm.

British patent document GB 1,090,038 A discloses a loader wagon comprising a pickup device and a discharge device in the form of a conveyor belt which conveyor belt can be placed in an operative position distanced from the frame of the loader wagon and in an inoperative position close to said frame so as not to hinder operation of the pickup device.

Therefore, the technical problem which is addressed by the present invention is that of providing a mixing wagon which can overcome the drawbacks mentioned above with reference to the prior art.

This problem is resolved by the mixing wagon according to Claim 1.

Preferred characteristics of the invention are defined in the dependent claims.

The object of the present invention makes it possible to use loading means having an arm of modest dimensions, while retaining the advantages associated with the presence of front discharge, without the need for complication constructional solutions.

The manoeuvrability is therefore improved, and the general driving of the wagon is facilitated.

Moreover, the wagon according to the present invention has rather modest overall dimensions, particularly in terms of longitudinal extension, compared with conventional wagons. This also helps to increase the ease of driving and manoeuvring the wagon.

The characteristics and further advantages of the invention will be more clearly apparent from the following detailed description of a preferred, but non-exclusive, example of embodiment of the invention, illustrated, for guidance and in a non-limiting way, with reference to the attached drawings, in which:
- Figure 1 is a side view of a mixing wagon according to the present invention in a first operating configuration;
- Figure 1A is a partial perspective view showing a loading device and a conveying member, which are details of the mixing wagon of the present invention, in the operating configuration of Figure 1;
- Figure 2 is a side view of the mixing wagon according to the present invention in a second operating configuration;
- Figure 2A is a partial perspective view showing the loading device and the conveying member of the mixing wagon of the present invention, in the operating configuration of Figure 2;
- Figure 3 is a partial view, in frontal perspective, of the mixing wagon according to the present invention in the operating configuration of Figure 2; and
- Figure 4 is a partial view, in perspective from below, of the mixing wagon according to the present invention in the operating configuration of Figure 2.

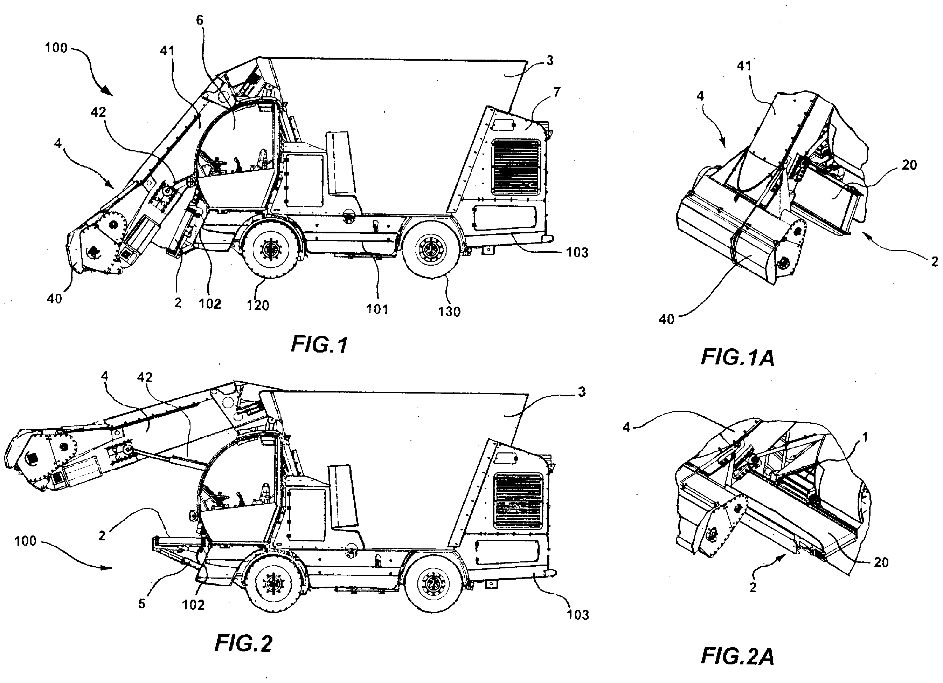

With initial reference to Figure 1, a mixing wagon is indicated as a whole by the reference numeral 100.

In the context of the present invention, the term "mixing wagon" denotes a self-propelled vehicle having independent means of propulsion (not shown in the drawings), and intended for the collection, mixing and distribution of a fodder mixture. Clearly, however, the same principles may also be applied to a towed vehicle, i.e. one not provided with its own means of propulsion. The wagon 100 has a supporting structure 101 equipped with at least two pairs of wheels 120 and 130, positioned, respectively, in a front or forward part 102 and in a rear part 103 of the wagon.

On the supporting structure 101 of the mixing wagon 100 there are a driver's cab 6 and an engine compartment 7, in which the means of propulsion of the wagon 100 are housed, these elements defining, respectively, the aforesaid front part 102 and rear part 103. More precisely, the front and rear parts are longitudinally opposed to one another, and the front part coincides with the direction of advance of the wagon 1, defined by the driver's cab 6.

In an intermediate position between the driver's cab 6 and the engine compartment 7 there is also a mixing container 3, in which the fodder product is mixed by means of a screw which is not shown in the drawings. The mixing container 3 is of a known type, and may if necessary be of the type having more than one screw, particularly two screws. The container 3 is also supported on the chassis 101 and substantially occupies the whole space defined by the centre distance between the front wheels 120 and the rear wheels 130.

Again with reference to Figures 1 and 2, the wagon 100 according to the present invention comprises a fodder product loading device 4, formed by a cutter 40 of a known type, or other equivalent collecting element, mounted on a movable arm 41, which collects the product from the ground, the product then being conveyed along the arm 41 to the mixing container 3. According to a preferred embodiment, the fodder product loading device 4 is connected to the supporting structure 101 in such a way that it can be lowered towards a fodder product collection area. Preferably, this is done by hinging the arm 41 near an upper mouth of the mixing container 3, and actuating the arm by means of a linear actuator 42. Thus the loading device 4 can be alternatively placed in the configuration of Figure 1, in which the cutter 40 is located near the ground to collect the product and send it via the arm 41 to the mixing container, or in the configuration of Figure 2, in which it is raised and does not interfere with the distribution action, as will be described more fully below.

The mixing container 3 also has a discharge opening, not shown in the drawings, positioned on a front side wall of the container 3, near the bottom of the latter.

The discharge opening is also provided with a respective closure device, not shown in the drawings, which allows the opening to be alternatively opened or closed. By way of example, the closure device may take the form of a sliding door which can be used, advantageously, to regulate the flow rate of the product leaving the container. In any case, the use of different types of closure may also be envisaged.

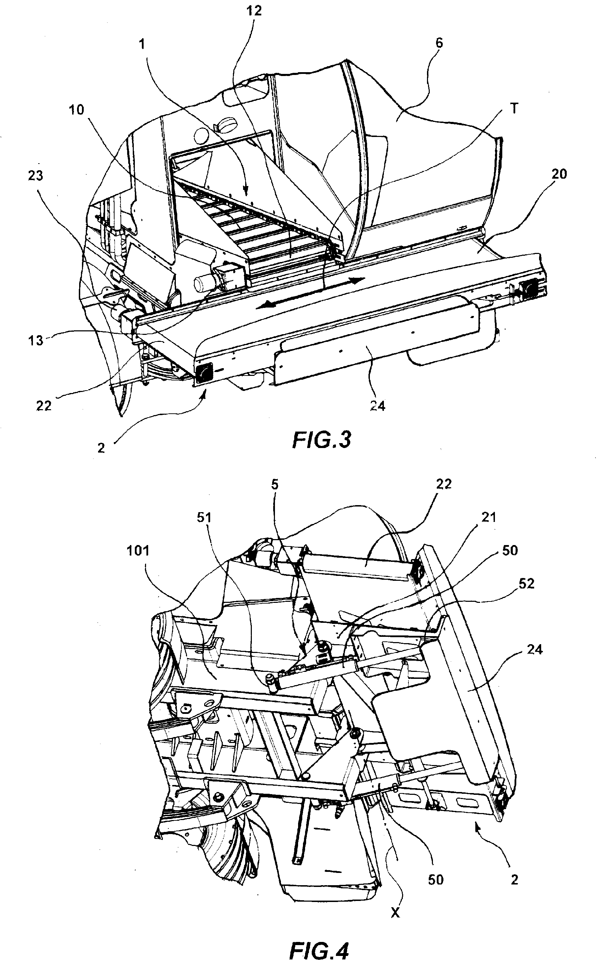

The mixing wagon according to the present invention therefore comprises a first conveying member 1 positioned at the outlet of the discharge opening. More precisely, and as better shown in Figure 3, the first conveying member 1 comprises a conveyor belt 12 forming a conveying surface 10 which is moved by a hydraulic motor 13.

According to a preferred embodiment, the first conveying member 1 extends away from the outlet opening, parallel to a direction of longitudinal extension of the supporting structure 101. Thus the fodder product discharged from the mixing container 3 is removed from the container and conveyed towards the front part 102 of the wagon.

Preferably, the first conveying member 1 extends at the side of the driver's cab 6, and, even more preferably, under the arm of the loading device 4. In this case, the driver's cab 6 is placed on one side of the wagon 100, while the first conveying member 1 is substantially central, parallel to a longitudinal axis of symmetry of the wagon 100.

At the outlet from the first conveying member 1, the mixing wagon according to the present invention comprises a second conveying member 2, transverse to the first, and capable of receiving the fodder product from the first member, as can be seen in Figure 3. In the present embodiment, the second conveying member 2 is, in practice, located in front of the driver's cab 6. More generally, according to a preferred embodiment, the second conveying member 2 is made so as to project frontally from the front part 102.

Preferably, the second conveying member 2 also comprises a belt 22 which forms a conveying surface 20 having a longitudinal extension perpendicular to that of the belt 12 of the first conveying member 1.

Thus the rotation of the belt 22 by means of a further hydraulic motor 23 enables the fodder product to be conveyed in a direction transverse to the direction of advance generated by the first conveying member 1, so that the product is discharged laterally.

It should be noted that the location of the second conveying member 2 described above advantageously enables the operator to have an excellent view of the feed distribution operations.

In this position, however, the second conveying member interferes with the complete lowering of the arm 41 of the loading device 4.

Therefore, with reference to Figures 2 and 4, the second conveying member is preferably connected rotatably to the supporting structure 101, being pivoted on an axis of rotation X.

The rotation of the second conveying member 2 about the axis X therefore enables this member to be moved between an operating configuration, in which it is substantially parallel to the ground and receives the fodder product from the first conveying member 1 in order to distribute the product laterally relative to the wagon 100, and an inoperative configuration, in which it is rotated downwards and is therefore moved to a position nearer to the supporting structure 101 than in the working configuration. Consequently, in the present embodiment, when in the inoperative configuration, the second conveying member is to be transverse with respect to the ground or, in general, to the surface on which the wagon is resting.

As can be seen in Figure 1, when it is in the inoperative configuration the second conveying member does not occupy the front area of the wagon, and therefore allows the cutter to be lowered to the ground, without the need to provide a particularly long arm.

Preferably, rotation takes place by means of at least one linear actuator 50, rotatably connected to the second conveying member 2 at a first end 51, and the first end being rotatably connected to the chassis in a lower position than that of the axis of rotation X of the second conveying member 2. This configuration makes it possible, in particular, to make the second conveying member 2 rotate downwards, thereby facilitating the dropping to the ground of any residues of fodder products which may have remained on the belt during the distribution phase.

With reference now to Figures 3 and 4, the second conveying member 2 preferably comprises a supporting chassis 21 which supports the conveyor belt 22. According to a preferred embodiment, the conveyor belt 22, together with the elements provided for moving it, can be translated relative to the supporting chassis 21 along the direction of conveying T defined by the conveyor belt 22 itself. Thus the fodder product can be discharged at a greater lateral distance from the wagon.

Also according to a preferred embodiment, the second conveying member 2 further comprises a bumper element 24 which extends laterally relative to the conveying member, and therefore frontally relative to the wagon 1. Preferably, the bumper element 24 is fixed to the supporting chassis 21 so that it can also be moved together with the conveying member 2 in its rotary movement.

As an alternative to the linear actuator which rotates the second conveyor belt 2, the second conveying member 2 may also be supported movably on the supporting structure 101 in alternative ways, provided that it can be moved between the operating configuration and an inoperative configuration in which the second conveying member 2 is placed in a position nearer to the supporting structure 101 than in the working configuration. For example, translational movements of the second conveying member 2 may be provided for the purpose of moving it away from or towards the supporting structure 101, or combined rotary and translational movements may be provided.

It is therefore evident that the mixing wagon according to the present invention makes it possible to resolve the problems mentioned with reference to the present invention, because of the possibility of moving the second conveying member to bring it to a position nearer to the supporting structure of the vehicle. Thus the cutter of the loading device can be lowered in the area normally occupied by the second conveying member during the distribution operation.

Thus it is possible to use an arm having a smaller longitudinal extension, and therefore projecting to a lesser degree from the wagon, thereby improving the manoeuvrability of the wagon.

A further advantage is that the mixing wagon is easier to garage.

## Claims

1. A mixing wagon (100) for preparing and distributing fodder mixtures, comprising:
- a supporting structure (101) equipped with wheels (120, 130),
- a mixing container (3) for mixing a fodder product, the container (3) having an outlet opening for the passage of the mixed fodder product,
- a loading device (4) for loading fodder product into the mixing container (3), connected to the supporting structure (101) in such a way that it can be lowered towards a fodder product collection area, the loading device comprising a collecting element (40) and an arm (41) extending towards a front part (102) of the wagon (100);
- a first conveying member (1) which is placed adjacent to the outlet opening and extends away from the outlet opening, parallel to a direction of longitudinal extension of the supporting structure (101); and a second conveying member (2) which is transverse to the first (1) and is supported on the supporting structure (101) at the front part (102);
**characterized in that** the second conveying member (2) is supported movably on the supporting structure (101), and **in that** it comprises a movement device (5) for moving the second conveying member (2) between an operating configuration, in which it receives the fodder product from the first conveying member (1) in order to distribute the product and in which it interferes with the lowering of the arm (41) of the loading device (4) towards the fodder product collection area, and an inoperative configuration, in which it is placed in a position nearer to the supporting structure (101) than in the working configuration, thereby allowing the arm to be lowered.

2. A mixing wagon (1) according to Claim 1, wherein the second conveying member (2) is rotatably connected to the structure (101).

3. A mixing wagon (1) according to Claim 1 or 2, wherein the movement device comprises at least one linear actuator (50).

4. A mixing wagon (1) according to Claim 3, wherein a first end (51) of the linear actuator (50) is rotatably connected to the second conveying member (2) and a second end (52) of the actuator is rotatably connected to the supporting structure (101), the first end (51) being connected to the supporting structure (101) in a lower position than that of an axis of rotation (X) of the second conveying member (2).

5. A mixing wagon (1) according to Claims 2 and 3 or 4, wherein the second conveying member (2) is connected to the linear actuator (50) in such a way that the conveying member (2) undergoes a downward rotation as a result of the reduction in the length of the linear actuator (50).

6. A mixing wagon (1) according to any one of the preceding claims, wherein the second conveying member (2) comprises a supporting chassis (21) and a conveyor belt (22) which forms the conveying surface (20), the conveyor belt (22) being translatable with respect to the chassis (21) along a direction of conveyance (T) of the conveyor belt (22).

7. A mixing wagon (1) according to any one of the preceding claims, comprising a driver's cab (6), the first conveying member (1) extending at the side of the driver's cab (6) and the second conveying member (2) being placed in front of the driver's cab (6).

8. A mixing wagon (1) according to any one of the preceding claims, wherein the second conveying member (2) comprises a bumper element (24).

## Patentansprüche

1. Mischwagen (100) zum Aufbereiten und Verteilen von Futtermischungen, umfassend:
- eine Abstützanordnung (101), die mit Rädern (120, 130) versehen ist,
- einen Mischbehälter (3) zum Mischen eines Futterprodukts, wobei der Behälter (3) eine Auslassöffnung für den Durchgang des gemischten Futterprodukts aufweist,
- eine Beladevorrichtung (4) zum Beladen eines Futterprodukts in den Mischbehälter (3), der mit der Abstützanordnung (101) derart verbunden ist, dass er zu einem Futterprodukt-Sammelbereich abgesenkt werden kann, wobei die Beladevorrichtung ein Sammelelement (40) und einen Arm (41) aufweist, der sich zu einem Vorderteil (102) des Wagens (100) erstreckt;
- ein erstes Förderelement (1), das benachbart zur Auslassöffnung angeordnet ist und sich weg von der Auslassöffnung parallel zu einer Richtung einer Längsausdehnung der Abstützanordnung (101) erstreckt; und ein zweites Förderelement (2), das quer zur ersten (1) ist und auf der Abstützanordnung (101) am Vorderteil (102) abgestützt ist;
- **dadurch gekennzeichnet, dass** das zweite Förderelement (2) beweglich auf der Abstützanordnung (101) abgestützt ist, und dadurch, dass es eine Bewegungsvorrichtung (5) zum Bewegen des zweiten Förderelements (2) zwischen einer Betriebskonfiguration, in der es das Futterprodukt vom ersten Förderelement (1) aufnimmt, um das Produkt zu verteilen, und in der es das Absenken des Arms (41) der Beladevorrichtung (4) zum Futterprodukt-Sammelbereich beeinflußt, und eine Außerbetrieb-Konfiguration aufweist, in der es in einer Position, die näher zur Abstützanordnung (101) als in der Arbeitskonfiguration ist, angeordnet ist, wodurch dem Arm ein Absenken ermöglicht wird.

2. Mischwagen (1) gemäß Anspruch 1, wobei das zweite Förderelement (2) drehbeweglich mit der Anordnung (101) verbunden ist.

3. Mischwagen (1) gemäß Anspruch 1 oder 2, wobei die Bewegungsvorrichtung zumindest einen Linearantrieb (50) aufweist.

4. Mischwagen (1) gemäß Anspruch 3, wobei ein erstes Ende (51) des Linearantriebs (50) drehbeweglich mit dem zweiten Förderelement (2) verbunden ist und ein zweites Ende (52) des Antriebs drehbeweglich mit der Abstützanordnung (101) verbunden ist, wobei das erste Ende (51) mit der Abstützanordnung (101) in einer niedrigeren Position als die einer Drehachse (X) des zweiten Förderelements (2) verbunden ist.

5. Mischwagen (1) gemäß Anspruch 2 und 3 oder 4, wobei das zweite Förderelement (2) mit dem Linearantrieb (50) derart verbunden ist, dass sich das Förderelement (2) einer Abwärtsdrehung aufgrund der Reduzierung der Länge des Linearantriebs (50) unterzieht.

6. Mischwagen (1) gemäß einem der vorhergehenden Ansprüche, wobei das zweite Förderelement (2) ein abstützendes Chassis (21) und ein Förderband (22) aufweist, das die Förderfläche (20) bildet, wobei das Förderband (22) bezüglich des Chassis (21) entlang einer Förderrichtung (T) des Förderbands (22) übertragbar ist.

7. Mischwagen (1) gemäß einem der vorhergehenden Ansprüche, der ein Fahrerhaus (6) aufweist, wobei sich das erste Förderelement (1) an der Seite des Fahrerhauses (6) erstreckt, und das zweite Förderelement (2) vor dem Fahrerhaus (6) angeordnet ist.

8. Mischwagen (1) gemäß einem der vorhergehenden Ansprüche, wobei das zweite Förderelement (2) ein Stoßfängerelement (24) aufweist.

## Revendications

1. Chariot mélangeur (100) pour la préparation et la distribution de mélanges de fourrage, comprenant :
- une structure de support (101) équipée de roues (120, 130),
- un contenant de mélange (3) pour le mélange d'un produit de fourrage, le contenant (3) présentant une ouverture de sortie pour le passage du produit de fourrage mélangé,
- un dispositif de chargement (4) pour le chargement du produit de fourrage dans le contenant de mélange (3), relié à la structure de support (101) de telle manière qu'il puisse être abaissé vers une zone de collecte de produit de fourrage, le dispositif de chargement comprenant un élément de collecte (40) et un bras (41) s'étendant vers une partie avant (102) du chariot (100) ;
- un premier élément de transport (1) qui est placé de manière adjacente à l'ouverture de sortie et s'étend loin de l'ouverture de sortie, parallèlement à une direction d'extension longitudinale de la structure de support (101) ; et un second élément de transport (2) qui est transversal au premier (1) et est supporté sur la structure de support (101) sur la partie avant (102) ; **caractérisé en ce que** le second élément de transport (2) est supporté de manière mobile sur la structure de support (101), et **en ce qu'**il comprend un dispositif de déplacement (5) pour le déplacement du second élément de transport (2) entre une configuration fonctionnelle, dans laquelle il reçoit le produit de fourrage du premier élément de transport (1) afin de distribuer le produit et dans laquelle il interfère avec l'abaissement du bras (41) du dispositif de chargement (4) vers la zone de collecte de produit de fourrage et une configuration non fonctionnelle, dans laquelle il est placé dans une position plus près de la structure de support (101) que dans la configuration de travail, permettant ainsi au bras d'être abaissé.

2. Chariot mélangeur (1) selon la revendication 1, dans lequel le second élément de transport (2) est relié de manière à pouvoir tourner à la structure (101).

3. Chariot mélangeur (1) selon la revendication 1 ou 2, dans lequel le dispositif de déplacement comprend au moins un actionneur linéaire (50).

4. Chariot mélangeur (1) selon la revendication 3, dans lequel une première extrémité (51) de l'actionneur linéaire (50) est reliée de manière à pouvoir tourner au second élément de transport (2) et une seconde extrémité (52) de l'actionneur est reliée de manière à pouvoir tourner à la structure de support (101), la première extrémité (51) étant reliée à la structure de support (101) dans une position inférieure à celle d'un axe de rotation (X) du second élément de transport (2).

5. Chariot mélangeur (1) selon la revendication 2 et 3 ou 4, dans lequel le second élément de transport (2) est relié à l'actionneur linéaire (50) de telle manière que l'élément de transport (2) subisse une rotation vers le bas suite à la réduction de longueur de l'actionneur linéaire (50).

6. Chariot mélangeur (1) selon l'une quelconque des revendications précédentes, dans lequel le second élément de transport (2) comprend un châssis de support (21) et une sangle de transport (22) qui forme la surface de transport (20), la sangle de transport (22) étant translatable par rapport au châssis (21) le long d'une direction de transport (T) de la sangle de transport (22).

7. Chariot mélangeur (1) selon l'une quelconque des revendications précédentes, comprenant une cabine de conducteur (6), le premier élément de transport (1) s'étendant sur le côté de la cabine de conducteur (6) et le second élément de transport (2) étant placé en face de la cabine de conducteur (6).

8. Chariot mélangeur (1) selon l'une quelconque des revendications précédentes, dans lequel le second élément de transport (2) comprend un élément amortisseur (24).
